(19) Europäisches Patentamt
European Patent Office
Office européen des brevets

(11) **EP 4 030 499 B1**

(12) **FASCICULE DE BREVET EUROPEEN**

(45) Date de publication et mention
de la délivrance du brevet:
**18.10.2023 Bulletin 2023/42**

(21) Numéro de dépôt: **22151104.1**

(22) Date de dépôt: **12.01.2022**

(51) Classification Internationale des Brevets (IPC):
**H01M 4/04** *(2006.01)* **B21B 1/40** *(2006.01)*

(52) Classification Coopérative des Brevets (CPC):
**H01M 4/382;** B21B 1/40; B21B 2001/383;
B21B 2265/04; B21B 2265/08; B21B 2265/24;
B21B 2275/05; Y02E 60/10

(54) **DISPOSITIF DE LAMINAGE DE FEUILLARD DE LITHIUM METAL**

WALZVORRICHTUNG FÜR LITHIUMMETALLBAND

DEVICE FOR ROLLING A LITHIUM-METAL STRIP

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.01.2021 FR 2100340**

(43) Date de publication de la demande:
**20.07.2022 Bulletin 2022/29**

(73) Titulaires:
• **COMMISSARIAT À L'ÉNERGIE ATOMIQUE ET AUX
ÉNERGIES ALTERNATIVES
75015 Paris (FR)**
• **REDEX
45210 Ferrières-en-Gâtinais (FR)**

(72) Inventeurs:
• **CLAUDE, Guillaume
38054 Cedex 09 Grenoble (FR)**
• **BARCHASZ, Céline
38054 Cedex 09 Grenoble (FR)**
• **COURABOEUF, Clément
45700 Pannes (FR)**
• **BLANC, Lionel
38054 Cedex 09 Grenoble (FR)**

(74) Mandataire: **Brevalex
Tour Trinity
1 B Place de la Défense
92400 Courbevoie (FR)**

(56) Documents cités:
EP-A1- 0 147 929    CN-A- 110 010 844
US-A- 3 721 113    US-A- 3 783 666

**Description**

**DOMAINE TECHNIQUE ET ÉTAT DE LA TECHNIQUE ANTÉRIEURE**

La présente invention se rapporte à un dispositif de laminage de feuillard en lithium métal.

A ce jour la technologie lithium-ion permet d'atteindre des densités d'énergie de l'ordre de 250 Wh/kg et la marge de progression pour cette technologie est faible selon les spécialistes. Les technologies dites « tout solide » semblent être l'avenir du lithium ion avec notamment l'utilisation de lithium métal à l'anode. En effet, les densités d'énergie massique et volumique de ce matériau sont très élevées et permettraient, si ces nouvelles technologies émergent, d'accroître considérablement la densité d'énergie des accumulateurs.

Un des enjeux forts est donc de maîtriser le procédé de fabrication des feuillards de lithium métal, utilisé en large excès dans les batteries lithium métal à ce jour, limitant de ce fait les densités d'énergie. Les épaisseurs visées, de l'ordre de quelques microns à quelques dizaines de microns, sont atteintes à l'aide d'un laminoir.

Le lithium métal est un matériau malléable, collant et donc très fragile, la fabrication de feuillards de quelques dizaines de $\mu$m est alors relativement complexe. Il est donc nécessaire d'optimiser tous les paramètres de laminage pour maîtriser le procédé et ainsi produire des feuillards de quelques dizaines de $\mu$m.

Les cylindres de laminage sont généralement en métal. Afin d'éviter un collage du lithium sur les cylindres de laminage, un film en matériau polymère est interposé entre chaque cylindre de laminage et le lithium métal. Un exemple d'un tel dispositif de fabrication est décrit dans le document US 3 783 666, dans lequel des bandes sans fin en polyvinyle ou en polyéthylène sont enroulées autour des cylindres de laminage. Ce dispositif permet la fabrication de film de lithium métal de l'ordre de 250 $\mu$m.

Le document EP0692831 décrit un dispositif de laminage de feuillards de lithium permettant d'atteindre des épaisseurs de quelques dizaines de $\mu$m, cependant il requiert la mise en oeuvre d'un lubrifiant de laminage.

**EXPOSÉ DE L'INVENTION**

C'est par conséquent un but de la présente invention d'offrir un dispositif de laminage de feuillard de lithium métal à sec, i.e. sans apport de lubrifiant liquide.

Le but énoncé ci-dessus est atteint par un dispositif de laminage selon la revendication 1 comportant au moins deux cylindres de laminage entre lesquels le lithium métal est destiné à être laminé, des moyens d'alimentation en un film de lithium métal en entrée du laminoir disposés en amont de cylindres de laminage, des moyens de stockage d'un film de lithium métal en sortie du laminoir, lesdits moyens de stockage étant disposés en aval des cylindres de laminage. Le dispositif applique une traction sur le film de lithium en sortie du laminoir de sorte qu'il soit sous tension mécanique. Le dispositif comporte également des moyens de circulation de deux films en matériau plastique disposés de sorte à interposer un film en matériau plastique entre chaque cylindre de laminage et le film de lithium et à faire circuler lesdits films avec le film de lithium.

Les inventeurs ont déterminé qu'il existait une gamme d'angle de décollage du film et du feuillard permettant de réaliser un film de lithium métal de deuxième épaisseur de quelques dizaines de $\mu$m en réduisant, voire supprimant, le risque de déchirure du film et sans ajout de lubrifiant liquide. cette gamme d'angle est obtenue par des orientations particulières de chaque films en matériau plastique en aval des cylindres de laminage.

L'orientation particulière des films plastiques est telle que la ligne de séparation entre un film en matériau plastique et le film lithium se situe dans une zone au-delà d'un plan horizontal passant par l'axe de rotation du cylindre de laminage avec lequel le film en matériau plastique est en contact.

Des films lithium de quelques dizaines de $\mu$m d'épaisseur, par exemple entre 10 $\mu$m et 100 $\mu$m, sans déchirure peuvent être obtenus, sans mise en oeuvre de lubrifiant qui aurait pu contaminer le lithium métal.

Avantageusement, la ligne de séparation est située dans une zone située entre le plan horizontal et un plan vertical passant par l'axe de rotation du cylindre.

De préférence, la traction spécifique appliquée aux films plastiques est comprise entre 0,1N/mm et 0,6 N/mm, de préférence cette tension est comprise entre 0,2N/mm et 0,3N/mm. L'application de cette traction spécifique, associée à l'orientation d'un ou des films en matériau plastique par rapport au(x) rouleau(x) de laminage permet de faciliter le décollement entre les films plastiques et le film de lithium de deuxième épaisseur.

Par exemple, l'orientation particulière de chaque film en matériau plastique est obtenue par un rouleau d'axe de rotation parallèle à l'axe de rotation du cylindre de laminage, le film en matériau plastique passant entre le cylindre de laminage et le rouleau. Avantageusement, le film en matériau plastique comporte un revêtement en silicone.

Un des objets de la présente demande est un dispositif de laminage d'un feuillard de lithium métal comportant une zone de laminage comprenant au moins deux cylindres de laminage entre lesquels est destiné à passer un feuillard de lithium de première épaisseur, chaque cylindre de laminage tournant autour d'une axe de rotation, une zone d'alimentation comprenant des moyens pour alimenter la zone de laminage avec le feuillard de lithium de première épaisseur, des moyens d'alimentation en deux films en matériau plastique de sorte que chaque film en matériau plastique s'interpose entre le feuillard de lithium de première épaisseur et un cylindre de laminage, dit cylindre de laminage associé, et une zone de stockage comportant des moyens pour collecter un feuillard de lithium de deuxième épaisseur présentant une deuxième épaisseur inférieure à la première épaisseur. Le dispositif comporte également des moyens pour mettre en tension le feuillard de lithium de deuxième épaisseur et des moyens configurés pour assurer une séparation de chaque film en matériau plastique de la surface d'un des cylindres de laminage du côté de la zone de stockage dans une zone de séparation située au-delà d'un plan horizontal passant par l'axe de rotation dudit cylindre de laminage et située à l'opposé de l'autre cylindre de laminage, ladite zone de séparation incluant ledit plan horizontal (PH).

De préférence, les moyens appliquant une tension au feuillard de lithium de deuxième épaisseur sont configurés pour appliquer une tension par unité de surface de la section transversale du film de deuxième épaisseur entre 1 N/mm$^2$ et 1,4 N/mm$^2$.

De manière encore préférée, le dispositif de laminage comporte des moyens configurés pour appliquer une tension aux films en matériau plastique au moins dans la zone de stockage, lesdits moyens étant configurés pour appliquer une tension par unité de largeur des films en matériau plastique entre 0,1N/mm et 0,6 N/mm.

De manière avantageuse, Les moyens de séparation comportent, pour chaque film en matériau plastique, un rouleau dont l'axe de rotation est parallèle à celui du cylindre de laminage associé et dont l'axe de rotation est situé dans la zone de séparation.

La position du rouleau dans la zone de séparation est avantageusement modifiable.

Les films en matériau plastique peuvent comporter un revêtement en silicone au moins sur la face destinée à être en contact avec le lithium.

Par exemple, les films en matériau plastique sont en poly(téréphtalate d'éthylène).

Les films en matériau plastique peuvent être sous forme de bandes sans fin, leur tension étant réglée par un rouleau tendeur.

Selon une caractéristique additionnelle, le dispositif de laminage comporte dans la zone de stockage une bobine autour de laquelle est enroulé le feuillard de lithium de deuxième épaisseur et des moyens pour enrouler simultanément un film en matériau plastique de sorte à éviter le collage du feuillard de lithium de deuxième épaisseur sur lui-même. Selon une caractéristique additionnelle, le dispositif de laminage comporte deux actionneurs pour entraîner en rotation chaque cylindre de laminage séparément et une unité de commande configurée pour commander les deux actionneurs de sorte que les deux cylindres de laminage tournent à des vitesses (V1, V1) différentes.

## BRÈVE DESCRIPTION DES DESSINS

La présente invention sera mieux comprise sur la base de la description qui va suivre et des dessins en annexe sur lesquels:

[Fig. 1] est une représentation schématique d'un dispositif de de laminage d'un film de lithium par procédé de laminage

[Fig. 2] est une vue de détail d'un dispositif de laminage d'un film de lithium métal selon un exemple de réalisation,

[Fig. 3] est une vue de détail d'un dispositif de laminage d'un film de lithium métal selon un autre exemple de réalisation.

## EXPOSÉ DÉTAILLÉ DE MODES DE RÉALISATION PARTICULIERS

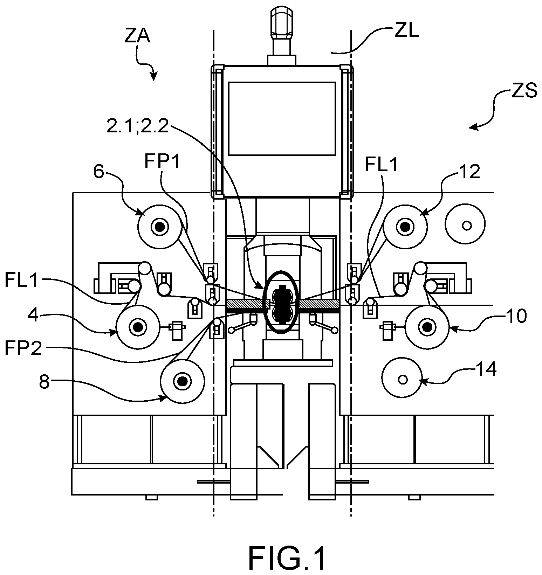

Sur la figure 1, on peut voir un dispositif de laminage de film de lithium, également appelé feuillard, comportant une zone de laminage ZL du lithium, une zone d'alimentation ZA en lithium en amont de la zone de laminage ZL, une zone de stockage du lithium ZS en aval de la zone de laminage ZL.

Dans la présente demande le sens amont - aval s'entend de la zone d'alimentation vers la zone de stockage.

Dans la présente demande, les expressions « film de lithium » et « film de lithium métal » désignent un film en lithium ou en alliage de lithium, comprenant par exemple et de manière non limitative du magnésium et/ou de l'aluminium...

La zone de laminage comporte au moins deux cylindres de laminage 2.1, 2.2 en regard, les surfaces extérieures en regard des cylindres étant séparées de l'épaisseur souhaitée du film de lithium. Plusieurs paires de cylindres de laminage disposés les uns à la suite des autres de l'amont vers l'aval peuvent être mises en oeuvre par exemple pour abaisser progressivement l'épaisseur du film de lithium. Les cylindres de laminage sont entraînés en rotation par des actionneurs, tels que des moteurs électriques.

Le plan dans lequel circule le film de lithium entre les deux cylindres de laminage sera désigné « plan de laminage ».

La zone d'alimentation ZA comporte un dévidoir 4 d'un film FL1 de lithium métal d'une première épaisseur e1. Le film est par exemple obtenu par extrusion et présente par exemple une épaisseur de l'ordre de 200 μm. Le film est enroulé sur le dévidoir. Des rouleaux et des guides généralement mis en oeuvre dans les laminoirs assurent le guidage du film FL1 de première épaisseur jusqu'à la zone de laminage ZL.

La zone d'alimentation ZA comporte également un dévidoir 6 d'un premier film en matériau plastique FP1, une partie du film FP1 étant destinée à s'interposer entre le cylindre de laminage 2.1 et le film de lithium FL1 de première épaisseur et à être en contact avec le cylindre de laminage 2. La zone d'alimentation ZA comporte également un dévidoir 8 d'un deuxième film en matériau plastique FP2, le film FP2 étant destiné à s'interposer entre le cylindre de laminage 2.2 et le film de lithium FL1 de première épaisseur. Des rouleaux et guides peuvent être mis en oeuvre pour guider les films en matériau plastique FP1 et FP2 jusqu'à la zone de laminage.

Chaque film en matériau plastique FP1, FP2 est associé à un cylindre de laminage 2.1, 2.2 respectivement.

La zone de stockage ZS comporte une bobine 10 sur laquelle s'enroule le film de lithium métal FL1 de deuxième épaisseur inférieure à la première épaisseur, une bobine 12 sur laquelle s'enroule le film en matériau plastique FP1 et une bobine 14 sur laquelle s'enroule le film en matériau plastique FP2. Des rouleaux et guides peuvent être mis en oeuvre pour guider les films de lithium FL1 de deuxième épaisseur, les films en matériau plastique FP1 et FP2 de la zone de laminage vers leur bobine de stockage.

Les dévidoirs et les bobines sont entraînés en rotation par des actionneurs, tels que des moteurs électriques.

Les éléments de la zone d'alimentation et de la zone de stockage, notamment le dévidoir 4 et les dévidoirs 6, 8 et les bobines 12, 14, sont commandés de sorte que le film de lithium en entrée du laminoir et les films en matériau plastique FP1, FP2 aient des vitesses de déplacement proches ou égales. La vitesse de la bobine 10 du film de lithium en sortie du laminoir est différente de la vitesse des dévidoirs 4, 6 et 8 et des bobines 12, 14.

Les axes des bobines, rouleaux, cylindres sont parallèles entre eux et normaux à la direction de déplacement des films.

Avantageusement un film en matériau plastique est enroulé en même temps que le film FL1 de deuxième épaisseur sur la bobine 10 de sorte que les enroulements de film FL1 de deuxième épaisseur sont séparés par un film en matériau plastique, par exemple en polypropylène.

A titre d'exemple pour un film de lithium compris entre 60 mm et 100 mm, l'effort de serrage exercé sur la bande de lithium par les cylindres de laminage est par exemple compris entre 10 kN et 23 kN. Cet effort est par exemple exercé par le cylindre de laminage 2.1.

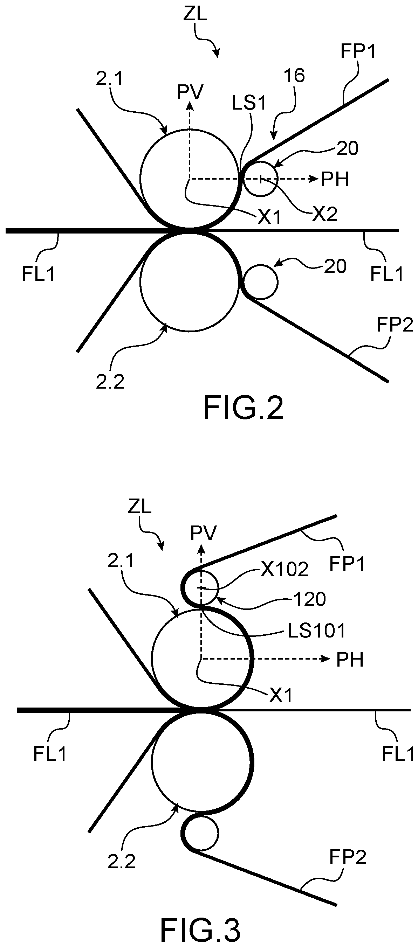

Sur la figure 2, on peut voir une vue de détail d'un dispositif de fabrication D1 d'un film de lithium métal selon un premier exemple de réalisation.

Le dispositif D1 comprend en plus des éléments du dispositif de la figure 1 des moyens de séparation 16 permettant de fixer la zone de séparation entre le film FP1 et la surface extérieure de son cylindre de laminage associé 2.1, et des moyens de séparation permettant de fixer la zone de séparation entre le film FP2 et son cylindre de laminage associé 2.2.

Les moyens de séparation des films FP1, FP2 étant similaires ou identiques, seuls les moyens 16 seront décrits en détail.

La zone de séparation se matérialise par une ligne de séparation LS1 qui est formée par une génératrice du cylindre de laminage. Sur la figure 2, cette ligne est symbolisée par un point.

Les inventeurs ont en effet déterminé qu'en fixant la position de la ligne de séparation dans une zone donnée, un film de lithium FL1 de deuxième épaisseur d'épaisseur de quelques dizaines de μm, par exemple entre 50 μm et 30 μm, pouvait être obtenu tout en limitant les risques de déchirure du film FL1 de deuxième épaisseur, et sans nécessité d'apport de liquide au niveau des cylindres de laminage.

Les inventeurs ont déterminé qu'une ligne de séparation se trouvant dans une zone située au-dessus d'un plan horizontal PH passant par l'axe de rotation X1 du cylindre de laminage 2.1 permettait de faciliter le décollage entre le film en matériau plastique et le film de lithium, réduisant sensiblement le risque de déchirure d'un film de lithium FL1 de deuxième épaisseur d'épaisseur de quelques dizaines de μm. Le plan horizontal PH est parallèle au plan de laminage.

Avantageusement la zone est également délimitée par un plan vertical PV passant par l'axe de rotation du cylindre de laminage 2.1. De manière préférée, la ligne de de séparation est située dans une zone délimitée entre un plan orienté à 45° par rapport au plan vertical et le plan vertical dans le sens antihoraire.

Dans l'exemple représenté et de manière avantageuse, les moyens 16 comportent un rouleau 20 disposé entre le cylindre de laminage 2.1 et la bobine 12 sur laquelle s'enroule le film en matériau plastique FP1, et dont l'axe de rotation X2 est dans le plan horizontal PH. Le rouleau 20 est disposé sur le cheminement du film FP1 entre le cylindre de laminage et la bobine 12 de sorte que la ligne de séparation LS1 soit dans le plan PH. On considère que la ligne de séparation LS1 et l'axe de rotation du rouleau 20 sont sensiblement dans le même plan contenant l'axe de rotation du cylindre de laminage.

Le film en matériau plastique FP1 chemine entre le cylindre de laminage 2.1 et le rouleau 20.

En variante, la bobine 12 et les rouleaux et guides du film en matériau plastique FP1 dans la zone de stockage sont disposés par rapport au cylindre de laminage 2.1 de sorte que la ligne de séparation LS1 soit dans le plan PH.

La mise en oeuvre d'un rouleau 20 permet de fixer de manière plus précise la position de la ligne LS1.

Par exemple, la distance séparant la surface du cylindre de laminage et la surface du rouleau est comprise entre 1 mm et 4 mm.

Le film de lithium FL1 de deuxième épaisseur est maintenu sous tension mécanique. De préférence, une traction spécifique est entre 1 $N/mm^2$ de section de film de lithium et 1,4 $N/mm^2$ de section de film de lithium est appliquée. Une traction spécifique de l'ordre de 1 $N/mm^2$ est de préférence appliquée à un film en lithium pur ou quasiment pur, et une traction spécifique de l'ordre de 1,4 $N/mm^2$ est de préférence appliquée à un film en alliage de lithium.

Par exemple, pour un film de lithium ayant une section est de 3 $mm^2$ (par exemple 60 mm de largeur et 50 μm d'épaisseur), l'effort appliqué est compris entre 3N (pour une traction spécifique de 1$N/mm^2$) et 4,2N

(pour une traction spécifique 1,4N/mm²)

La tension mécanique appliquée aux films en matériau plastique FP1 et FP2 en aval de la zone de laminage dépend de la largeur des films. La traction spécifique de préférence est comprise entre 0,1N/mm et 0,6 N/mm, de préférence cette tension est comprise entre 0,2N/mm et 0,3N/mm, ce qui facilite davantage le décollement et participe à la suppression de l'apparition de déchirure du film de lithium FL1 de deuxième épaisseur.

La tension du film FL1 de deuxième épaisseur et les tensions des films en matériau plastique en aval de la zone de laminage sont par exemple réglées en ajustant la vitesse et le couple de moteurs.

De manière très avantageuse, les films en matériau plastique comportent, au moins sur une face destinée à venir en contact avec le film de lithium, un revêtement de silicone réduisant les risques de collage entre le lithium et le film en matériau plastique. Le revêtement a par exemple une épaisseur de 100 nm.

Le silicone présente l'avantage de ne laisser aucun résidu après laminage. En effet aucune trace de silicone n'a été détectée sur le film FL1 de deuxième épaisseur.

Les films en matériau plastique sont par exemple en poly(téréphtalate d'éthylène) recouvert d'une couche de silicone solide, par exemple de quelques dizaines de nanomètres, sur au moins une face. L'épaisseur des films en matériau plastique est par exemple comprise entre 15 μm et 100 μm.

Avantageusement, le rouleau 20 a une position modifiable par rapport au cylindre de laminage, en particulier sa position angulaire, permettant d'adapter facilement le dispositif à la fabrication de film de différentes épaisseurs tout en limitant les risques de déchirure.

En variante les films en matériau plastique sont des boucles fermées formant des bandes sans fin, ce qui permet de ne pas avoir à gérer la longueur de film en matériau plastique restant dans la zone d'alimentation. La tension des films en matériau plastique est par exemple fixée au moyen d'un rouleau tendeur.

L'invention permet d'atteindre des épaisseurs de film de lithium de 30 μm sans aucune déchirure. Au contraire il a été constaté qu'en plaçant le rouleau 20 en-dessous du plan horizontal PH, des films ayant au moins une épaisseur de 60 μm se déchiraient.

Sur la figure 3, on peut voir un autre exemple de dispositif de laminage de film de lithium qui diffère de celui de la figure 2, par le fait que la ligne de séparation du film en matériau plastique et du cylindre de laminage associé est située sensiblement dans un plan vertical passant par l'axe de rotation du cylindre de laminage.

Dans l'exemple représenté et de manière avantageuse, les moyens 116 comportent un rouleau 120 qui est disposé entre le cylindre de laminage 2.1 et la bobine 12 sur laquelle s'enroule le film en matériau plastique FP1, et dont l'axe de rotation X102 est dans le plan vertical PV. Le rouleau 120 est disposé sur le cheminement du film FP1 entre le cylindre de laminage et la bobine 12 de sorte que la ligne de séparation LS101 soit sensiblement dans le plan PV. On considère que la ligne de séparation LS101 et l'axe de rotation du rouleau 120 sont sensiblement dans le même plan contenant l'axe de rotation du cylindre de laminage.

La ligne de séparation de chacun des films en matériau plastique peut être située au-delà du plan vertical en considérant le sens antihoraire. L'emplacement de la ligne de séparation peut dépendre de la disposition relative des différents éléments du dispositif de laminage et de la place disponible.

Dans les exemples des figures 2 et 3, les positionnements des rouleaux de séparation pour les deux films en matériau plastique sont symétriques rapport au plan de laminage. En variante, leur positionnement pourrait ne pas être symétrique, et les lignes de séparation ne pas être non plus situées symétriquement par rapport au plan de laminage. Egalement des moyens différents pour fixer l'emplacement de la ligne de séparation entre le film en matériau plastique et le cylindre de laminage associé peuvent être différents entre les films en matériau plastique.

Dans un mode de fonctionnement particulièrement avantageux, les actionneurs de chacun des cylindres de laminage sont pilotés indépendamment l'un de l'autre de sorte à les faire tourner à des vitesses différentes, afin de créer un différentiel de vitesse entre eux, ce qui permet de privilégier le collage du film de lithium sur le film plastique supérieur ou inférieur.

De préférence, la différence entre la vitesse V1 du cylindre de laminage supérieur 2.1 et la vitesse V2 du cylindre de laminage inférieur 2.2 est comprise entre :

$$-30\% \leq (V2 - V1)/V1 \leq 30\%.$$

## Revendications

1. Dispositif de laminage d'un feuillard de lithium métal comportant une zone de laminage (ZL) comprenant au moins deux cylindres de laminage (2.1, 2.2) entre lesquels est destiné à passer un feuillard de lithium de première épaisseur (FL1), chaque cylindre de laminage (2.1, 2.2) tournant autour d'une axe de rotation, une zone d'alimentation (ZA) comprenant des moyens pour alimenter la zone de laminage avec le feuillard de lithium de première épaisseur (FL1), des moyens d'alimentation en deux films en matériau plastique de sorte que chaque film en matériau plastique s'interpose entre le feuillard de lithium de première épaisseur et un cylindre de laminage (2.1, 2.2), dit cylindre de laminage associé, et une zone de stockage comportant des moyens pour collecter un feuillard de lithium (FL1) de deuxième épaisseur présentant une deuxième épaisseur inférieure à la première épaisseur, dans lequel le dispositif comporte également des moyens pour mettre en tension le feuillard de lithium de deuxième épaisseur et des moyens (20, 120) configurés pour assurer une séparation de chaque film en matériau plastique (FP1, FP2) de la surface d'un des cylindres de laminage (2.1, 2.2) du côté de la zone de stockage (ZS) **caractérisé en ce que** la zone de séparation est située au-delà d'un plan horizontal (PH) passant par l'axe de rotation dudit cylindre de laminage et située à l'opposé de l'autre cylindre de laminage, ladite zone de séparation incluant ledit plan horizontal (PH).

2. Dispositif de laminage selon la revendication 1, dans lequel les moyens appliquant une tension au feuillard de lithium de deuxième épaisseur sont configurés pour appliquer une tension par unité de surface de la section transversale du film de deuxième épaisseur entre 1 N/mm$^2$ et 1,4 N/mm$^2$.

3. Dispositif de laminage selon la revendication 1 ou 2, comportant des moyens configurés pour appliquer une tension aux films en matériau plastique au moins dans la zone de stockage, lesdits moyens étant configurés pour appliquer une tension par unité de largeur des films en matériau plastique entre 0,1N/mm et 0,6 N/mm.

4. Dispositif de laminage selon l'une des revendications 1 à 3, dans lequel les moyens de séparation comportent, pour chaque film en matériau plastique, un rouleau (20, 120) dont l'axe de rotation (X2, X102) est parallèle à celui du cylindre de laminage (2.1, 2.2) associé et dont l'axe de rotation (X2, X102) est situé dans la zone de séparation.

5. Dispositif de laminage selon la revendication 4, dans lequel la position du rouleau dans la zone de séparation est modifiable.

6. Dispositif de laminage selon l'une des revendications 1 à 5, dans lequel les films en matériau plastique (FP1, FP2) comportent un revêtement en silicone au moins sur la face destinée à être en contact avec le lithium.

7. Dispositif de laminage selon l'une des revendications 1 à 6, dans lequel les films en matériau plastique (FP1, FP2) sont en poly(téréphtalate d'éthylène).

8. Dispositif de laminage selon l'une des revendications 1 à 7, dans lequel les films en matériau plastique (FP1, FP2) sont sous forme de bandes sans fin, leur tension étant réglée par un rouleau tendeur.

9. Dispositif de laminage selon l'une des revendications 1 à 8, comportant dans la zone de stockage une bobine autour de laquelle est enroulé le feuillard de lithium de deuxième épaisseur et des moyens pour enrouler simultanément un film en matériau plastique de sorte à éviter le collage du feuillard de lithium de deuxième épaisseur sur lui-même.

10. Dispositif de laminage selon l'une des revendications 1 à 9, comportant deux actionneurs pour entraîner en rotation chaque cylindre de laminage séparément et une unité de commande configurée pour commander les deux actionneurs de sorte que les deux cylindres de laminage tournent à des vitesses (V1, V1) différentes.

**Patentansprüche**

1. Vorrichtung zum Walzen eines Lithiummetallbandes, einen Walzbereich (ZL) beinhaltend, der mindestens zwei Walzzylindern (2.1, 2.2) umfasst, zwischen denen ein Lithiumband erster Dicke (FL1) hindurchlaufen soll, wobei sich jeder Walzzylinder (2.1, 2.2) um eine Drehachse dreht, wobei ein Versorgungsbereich (ZA) Mittel umfasst, um den Walzbereichs mit dem Lithiumband erster Dicke (FL1) zu versorgen, und Mittel zum Versorgen mit zwei Kunststofffolien, so dass sich jede Kunststofffolie zwischen das Lithiumband erster Dicke und einen Walzzylinder (2.1, 2.2), zugeordneter Walzzylinder genannt, legt, und einen Lagerbereich, der Mittel zum Sammeln eines Lithiumbandes (FL1) zweiter Dicke beinhaltet, das eine zweite Dicke aufweist, die kleiner ist als die erste Dicke, wobei die Vorrichtung auch Mittel beinhaltet, um das Lithiumband zweiter Dicke zu spannen, und Mittel (20, 120), die konfiguriert sind, um eine Trennung jeder Kunststofffolie (FP1, FP2) von der Oberfläche eines der Walzzylinder (2.1, 2.2) auf der Seite des Lagerbereichs (ZS) sicherzustellen, **dadurch gekennzeichnet, dass** der Trennbereich jenseits einer horizontalen Ebene (PH) angeordnet ist, die durch die Drehachse des Walzzylinders verläuft und gegenüber dem anderen Walzzylinder angeordnet ist, wobei der Trennbereich die horizontale Ebene (PH) einschließt.

2. Walzvorrichtung nach Anspruch 1, wobei die Mittel, die eine Spannung an das Lithiumband zweiter Dicke anlegen, konfiguriert sind, um eine Spannung pro Flächeneinheit des Querschnitts der Folie zweiter Dicke zwischen 1 N/mm$^2$ und 1,4 N/mm$^2$ anzulegen.

3. Walzvorrichtung nach Anspruch 1 oder 2, Mittel beinhaltend, die konfiguriert sind, um eine Spannung an die Kunststofffolien mindestens im Lagerbereich anzulegen, wobei die Mittel konfiguriert sind, um eine Spannung pro Breiteneinheit der Kunststofffolien zwischen 0,1 N/mm und 0,6 N/mm anzulegen.

4. Walzvorrichtung nach einem der Ansprüche 1 bis 3, wobei die Trennmittel für jede Kunststofffolie eine Rolle (20, 120) beinhalten, deren Drehachse (X2, X102) parallel zu der des zugeordneten Walzzylinders (2.1, 2.2) verläuft und deren Drehachse (X2, X102) im Trennbereich angeordnet ist.

5. Walzvorrichtung nach Anspruch 4, wobei die Position der Rolle im Trennbereich veränderbar ist.

6. Walzvorrichtung nach einem der Ansprüche 1 bis 5, wobei die Kunststofffolien (FP1, FP2) mindestens auf der Fläche, die mit dem Lithium in Berührung kommen soll, eine Silikonbeschichtung beinhalten.

7. Walzvorrichtung nach einem der Ansprüche 1 bis 6, wobei die Kunststofffolien (FP1, FP2) aus Polyethylenterephthalat bestehen.

8. Walzvorrichtung nach einem der Ansprüche 1 bis 7, wobei die Kunststofffolien (FP1, FP2) in Form von endlosen Bahnen vorliegen, deren Spannung durch eine Spannrolle geregelt wird.

9. Walzvorrichtung nach einem der Ansprüche 1 bis 8, die im Lagerbereich eine Spule beinhaltet, auf der das Lithiumband der zweiten Dicke aufgewickelt ist, und Mittel zum gleichzeitigen Aufwickeln einer Kunststofffolie, so dass das Anhaften des Lithiumbandes der zweiten Dicke an sich selbst verhindert wird.

10. Walzvorrichtung nach einem der Ansprüche 1 bis 9, zwei Aktuatoren beinhaltend, um jeden Walzzylinders separat in Drehung zu versetzen, und eine Steuereinheit, die konfiguriert ist, um die zwei Aktuatoren zu steuern, so dass sich die zwei Walzzylinder mit unterschiedlichen Geschwindigkeiten (V1, V1) drehen.

**Claims**

1. A device for rolling a lithium-metal strip including a rolling zone (ZL) comprising at least two rolling cylinders (2.1, 2.2) between which a lithium strip of first thickness (FL1) is intended to pass, each rolling cylinder (2.1, 2.2) rotating about an axis of rotation, a supply zone (ZA) comprising means for supplying the rolling zone with the lithium strip of first thickness (FL1), means supplying two films of plastic material such that each film of plastic material is interposed between the lithium strip of first thickness and a rolling cylinder (2.1, 2.2), called associated rolling cylinder, and a storage zone including means for collecting a lithium strip (FL1) of second thickness having a second thickness which is less than the first thickness, in which the device also includes means for tensioning the lithium strip of second thickness and means (20, 120) configured to ensure a separation of each film of plastic material (FP1, FP2) from the surface of one of the rolling cylinders (2.1, 2.2) on the side of the storage zone (ZS) **characterised in that** the separation zone is located beyond a horizontal plane (PH) passing through the axis of rotation of said rolling cylinder and located opposite the other rolling cylinder, said separation zone including said horizontal plane (PH).

2. The rolling device according to claim 1, wherein the means applying a tension to the lithium strip of second thickness are configured to apply a tension per unit area of the cross section of the film of second thickness between 1 N/mm$^2$ and 1.4 N/mm$^2$.

3. The rolling device according to claim 1 or 2, including means configured to apply a tension to the films of plastic material at least in the storage zone, said means being configured to apply a tension per unit width of the films of plastic material between 0.1 N/mm and 0.6 N/mm.

4. The rolling device according to one of claims 1 to 3, wherein the separation means include, for each film of plastic material, a roller (20, 120) whose axis of rotation (X2, X102) is parallel to that of the associated rolling cylinder (2.1, 2.2) and whose axis of rotation (X2, X102) is located in the separation zone.

5. The rolling device according to claim 4, wherein the position of the roller in the separation zone can be changed.

6. The rolling device according to one of claims 1 to 5, wherein the films of plastic material (FP1, FP2) include a silicone coating at least on the face intended to be in contact with lithium.

7. The rolling device according to one of claims 1 to 6, wherein the films of plastic material (FP1, FP2) are made of polyethylene terephthalate.

8. The rolling device according to one of claims 1 to 7, wherein the films of plastic material (FP1, FP2) are in the form of endless bands, their tension being adjusted by a tensioning roller.

9. The rolling device according to one of claims 1 to 8, including in the storage zone a coil around which the lithium strip of second thickness is wound and means for simultaneously winding a film of plastic material so as to avoid gluing the lithium strip of second thickness to itself.

10. The rolling device according to one of claims 1 to 9, including two actuators to drive in rotation each rolling cylinder separately and a control unit configured to control the two actuators such that the two rolling cylinders rotate at different speeds (V1, V1).

FIG.1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3783666 A

- EP 0692831 A